# EUROPÄISCHE PATENTSCHRIFT

(11) **EP 0 381 244 B1**
(45) Veröffentlichungstag und Bekanntmachung des Hinweises auf die Patenterteilung: **06.10.1993**
(21) Anmeldenummer: 90102207.9
(22) Anmeldetag: 05.02.1990
(51) Int. Cl.: B65H 23/025

(54) **Breitstreckwalze**
Spreader roll
Rouleau d'étirage transversal

(30) Priorität: 03.02.1989 DE 3903161
(43) Veröffentlichungstag der Anmeldung: 08.08.1990
(73) Patentinhaber: Schmoock, Helmuth, D-21481 Lauenburg (DE)
(72) Erfinder: Schmoock, Helmuth, D-21481 Lauenburg (DE)
(74) Vertreter: Heldt, Gert, Dr. Dipl.-Ing.

(56) Entgegenhaltungen:
- DE-A- 2 630 335
- GB-A- 1 558 465
- PATENT ABSTRACTS OF JAPAN vol. 10, no. 40 (M-454)(2097) 18 Februar 1986, & JP-A-60 191955 (FUJI PATSUKU SYSTEM) 30 September 1985,

## Beschreibung

Die Erfindung betrifft eine Breitstreckwalze mit einem tragenden Kern, auf den ein Streifen in Form einer Schraubenlinie als Belag aufgewickelt ist, auf dessen Umfang mindestens teilweise eine zu fördernde und in ihrer Breite zu streckende Bahn aufliegt (GB-A- 1 558 465).

Derartige Breitstreckwalzen werden benötigt, wenn Bahnen auf-bzw. umgewickelt werden müssen. Eine Bahn muß auf ihrem Weg von einer Abwickelrolle zu einer Aufwickelrolle faltenfrei gehalten werden. Sehr häufig entsteht bei einer solchen Umwicklung einer Bahn eine Falte, die mit der Bahn auf die Aufwickelrolle aufgewickelt wird. Auf diese Weise kann die gesamte Bahn, die beispielsweise aus einer Kunststoffolie, aus Papier, Gewebe, Vließstoffen oder anderen Stoffen bestehen kann, völlig entwertet werden.

Zu diesem Zwecke werden Breitstreckwalzen benutzt, mit deren Hilfe quer zur Längsrichtung der Bahn verlaufende Kräfte in die Bahn eingeleitet werden, damit diese quer zu ihrer Längsrichtung gestreckt und damit faltenfrei geglättet wird. Derartige Breitstreckwalzen besitzen sehr häufig auf ihrer der Bahn zugewandten Oberfläche ein Profil das in Form von Schraubenlinien ausgebildet ist. Beispielsweise kann eine Breitstreckwalze im Bereich einer Hälfte ihrer Länge auf ihrem Unfang ein Profil im Sinne eines rechtsgängigen und auf der anderen Hälfte im Sinne eines linksgängigen Schraubengewindes aufweisen. Jede der beiden Schraubenlinien streckt die Bahn in eine vom jeweiligen anderen Schraubengewinde abgewandte Richtung, so daß auf diese Weise eine Glättung der Bahn quer zu ihrer Längsrichtung erreicht wird.

Eine Glättung erfolgt jedoch auch durch eine über die gesamte Walzenbreite sich in die gleiche Richtung erstreckende Schraubenlinie.

Derartige Schraubengewinde oder andere zu diesem Zwecke in die Oberfläche einer Breitstreckwalze eingebrachte Profile sind bisher im Regelfall dadurch erzeugt worden, daß in die Oberfläche der Walze derartige Profile eingeschliffen wurden. Beispielsweise wurden zu diesem Zwecke Walzen mit einer Gummiauflage versehen, in deren Oberflächen die jeweils benötigten Profile eingeschliffen wurden (DE-A-2 630 335). Die auf diese Weise erzeugten Breitstreckwalzen besitzen den Vorteil, daß sie einen guten Breitstreckeffekt erzielen und trotzdem für ihren Antrieb verglichen mit gebogenen Breitstreckwalzen nur einen geringen Kraftbedarf benötigen. Sie sind vielfältig einsetzbar, zum Beispiel für eine Vielzahl verschiedener Bahnen und Umschlingungswinkel. Der Nachteil dieser Breitstreckwalzen besteht im wesentlichen darin, daß sie sehr teuer sind, und daß sie für ihre Herstellung im Regelfall eine so lange Zeit benötigen, daß auf einen schnell wechselnden Bedarf beispielsweise aufgrund von unterschiedlichem Material der zu streckenden Bahnen nicht reagiert werden kann.

Darüber hinaus ist auch bereits versucht worden, Breitstreckwalzen dadurch herzustellen, daß auf einem steifen Kern ein Streifen aufgewickelt wird. Dieser Streifen war mit einer schraubenlinienförmigen Erhebung versehen, um ihm die notwendige Steife für die Verbindung mit einem tragenden Kern zu verschaffen. Die auf diese Weise hergestellte Breitstreckwalze konnte für eine Vielzahl von Wickelaufgaben nicht eingesetzt werden, da sie nicht in der Lage war, eine befriedigende Streckung der aufzuwickelnden Bahn hervorzurufen. Insbesondere konnten dünne Bahnen schon deswegen mit einer derartigen Breitstreckwalze nicht gestreckt werden, da sie durch die schraubenlinienförmige Erhebung in einem Maße verformt wurden, die ihre Weiterverarbeitung ausschlossen.

Aufgabe der vorliegenden Erfindung ist es daher, eine Breitstreckwalze der eingangs genannten Art so zu verbessern, daß ein elastischer Belag für eine Vielzahl von Wickelaufgaben fest und dauerhaft auf dem Kern einer Walze aufgebracht werden kann.

Diese Aufgabe wird erfindungsgemäß dadurch gelöst, daß der Streifen eine dem Kern abgewandte weitgehende zylindrische Belagoberfläche aufweist, in die ein Profil in Form von Nuten eingelassen ist.

Ein derartiger streifenförmiger Belag hat den Vorteil, daß er sehr fest auf den Kern aufgewickelt und gegebenenfalls mit ihm verklebt werden kann. Auf diese Weise kann ein vorhandener Kern schnell und sehr effektiv auf eine bestimmte Aufwickelaufgabe vorbereitet und zu deren Durchführung hergerichtet werden. Vorhandene Walzen werden dadurch nicht überflüssig, sondern können schnell für bestimmte Zwecke umgerüstet werden. Diese Umrüstung geschieht innerhalb von relativ kurzer Zeit, so daß sich ein Betrieb schnell und flexibel wechselnden Wickelaufgaben anpassen kann. Der Belag kann auf sehr unterschiedliche Weisen hergestellt werden. Sehr preiswert ist die Herstellung des Streifens durch Extrudieren. Dadurch kann auch ein langer Streifen schnell und preiswert hergestellt werden, so daß sein Preis einen Bruchteil der Kosten ausmacht, die durch die Anschaffung einer neuen Walze entstehen würden, deren Oberfläche zunächst gummiert und sodann zum Zwecke der Herstellung von Nuten geschliffen werden muß. Darüber hinaus kann die alte Walze mit dem neuen Belag weiter benutzt werden. Durch die Ausbildung verschiedener Belagstreifen können Walzen unterschiedlicher Breiten und Dicken hergestellt werden, so daß auch insoweit eine Anpassung an den jeweiligen Bedarf schnell möglich ist.

Darüber hinaus ist ein derartiger Belag geeignet, jede beliebige Bahn in der gewünschten Weise zu strecken. Auf der weitgehend zylindrischen Belagoberfläche liegen auch empfindliche Bahnen großflächig auf und werden daher nicht in unerwünschter Weise verformt. Die Nuten, die sich durch die Oberfläche der Walze erstrecken, bewirken einen gerichteten Zulauf der Falten auf die Walze, wodurch große Falten sich auf mehreren Nuten verteilen.

Durch die Verteilung der vorhandenen Falten über die gesamte Walzenbreite erfolgt eine Homogenisierung der in der Bahn vorhandenen Spannung. Durch die gleichmäßige Spannungsverteilung beim ersten Kontakt zwischen der Walze und der Bahn in Folge einer Deformation der Walzenoberfläche sowie durch einen Längenausgleich durch die umlaufenden Nuten werden mögliche Verspannungen, die zu Falten führen würden, bereits auf der freien Länge der Bahn vor der Walze ausgeglichen. Darüber hinaus werden bereits bestehende Falten über die gesamte Breite der Bahn gestreckt.

Gemäß einer bevorzugten Ausführungsform der Erfindung weist der Streifen zwei einander etwa parallel verlaufende Seitenbegrenzungen auf, von denen die eine einer von der Schraubenlinie beschriebenen ersten Windung an der anderen einer zweiten Windung anliegt, die der ersten Windung benachbart ist. Durch diese Ausbildung des Streifens wird erreicht, daß auf der Oberfläche des Kerns ein zusammenhängender Belag aufgebaut wird, auf dem die Bahn großflächig aufliegt und sicher geführt wird.

Gemäß einer weiteren bevorzugten Ausführungsform der Erfindung sind die Seitenbegrenzungen an einem Grundkörper ausgebildet, in den sich von der Belagoberfläche in Richtung auf den Kern mindestens eine Nut erstreckt, die mindesetens einseitig von einer Lippe begrenzt ist. Auf dieser Lippe liegt die Bahn mit ihrer der Breitstreckwalze zugewandten Unterseite auf. Dabei deformiert sich die Lippe und gleicht auf diese Weise Spannungsunterschiede innerhalb der Bahn aus, schon bevor diese mit der Walze in Kontakt kommt. Darüber hinaus bewirkt die Deformation der Lippe auch gleichmäßige Spannungsverhältnisse, wenn die Bahn die Walze verläßt.

Gemäß einer weiteren bevorzugten Ausführungsform der Erfindung weist die Lippe gegenüber der Belagoberfläche einen Neigungswinkel auf, der im nichtverfomten Zustand der Lippe zwischen 30° und 50° liegt. Dieser Neigungswinkel kann eine Größe aufweisen, die von einem auf den Streifen aufgebrachten Zug abhängt, mit dem dieser beim Befestigen auf dem Kern vorgespannt wird. Auf diese Weise kann die Lippe eine dem jeweiligen Bahnmaterial angepaßte Steifigkeit aufweisen. Dabei werden mit zunehmender Bahnsteifigkeit steifere Lippen eingesetzt.

Gemäß einer weiteren bevorzugten Ausführungsform der Erfindung weist jede Lippe eine sich von der Belagoberfläche in den Grundkörper erstreckenden Länge auf, die entsprechend der Tiefe der Nut bemessen ist, die sie begrenzt. Mit zunehmender Länge der Lippe erhält diese in Abhängigkeit von dem auf den Streifen aufgebrachten Zug eine höhere Elastizität. Darüber hinaus wird die Steifigkeit der Lippe auch mit zunehmendem Lippenquerschnitt größer.

Gemäß einer weiteren bevorzugten Ausführungsform der Erfindung mündet die Lippe in die Belagoberfläche mit einer Oberkante ein, die einen stark verformbaren Bereich der Lippe ausbildet und in Richtung auf eine die Nut gegenüber der Lippe begrenzende Rückenfläche verformbar ist. Auf diese Weise führt der in die Belagoberfläche einmündende stark verformbare Bereich große Bewegungen unter der Belastung der Bahn aus, so daß die Schwingform der Bahn vor ihrem ersten Walzenkontakt innerhalb der freien Lage positiv beeinflußt wird. Je nach dem Eigenschwingverhalten der Bahn, das von der freien Weglänge der Bahn abhängt, und der äußeren Schwinganregung, beispielsweise durch unruhigen Lauf der Bahn und/oder unrunden Lauf einer Walze, kann das Dämpfungsvermögen der Belagoberfläche auf Grund der abgestimmten Beschaffenheit der Lippe positive Auswirkungen auf die Faltenstreckung haben.

Gemäß einer weiteren bevorzugten Ausführungsform der Erfindung ist der Streifen in mindestens zwei Abschnitten auf dem Kern aufgewickelt, von denen der eine Abschnitt den Streifen in einer Wickelrichtung und mindestens ein anderer Abschnitt den Streifen in einer entgegengesetzen Wickelrichtung aufnimmt. Durch diese Anordnung des Profils in auseinanderstrebenden Wickelrichtungen wird ein zusätzlicher Breitstreckeffekt erzielt. Ein in derartiger Weise aufgewickeltes Lippenprofil mit gegenläufiger Schraubenwirkung hat drei wesentliche Mechanismen, mit denen es auf die breitzustreckende Bahn einwirkt:
1. Durch die gegenläufige Schraubenwirkung wird die Bahn gleichmäßig über die gesamte Breite der Breitstreckwalze gestreckt,
2. durch die Nuten wird die Spannung der Bahn bereits im Einlauf zur Walze homogenisiert und
3. durch die Deformation der Lippen wird die Bahn sowohl am Einlauf der Bahn zur Walze als auch am Auslauf aus dem Bereich der Walze gedämpft.

Das Profil des Streifens muß durch Geometrie und Materialhärte der Anwendung angepaßt werden und ist zusätzlich sowohl vom Durchmesser des zu bewickelnden Kerns als auch von der Vorspannung abhängig, mit der der Streifen auf den Kern aufgewickelt wird. Dabei ändert sich die Lippenform in Abhängigkeit sowohl von der Krümmung des Kerns als auch von der aufgebrachten Vorspannung. Mit Hilfe der erfindungsgemäßen Breitstreckwalze, die ohne Schwierigkeit auf jede beliebige Wickelaufgabe umgerüstet werden kann, ist es möglich, sich jedem beliebigen Bahnmaterial anzupassen, ohne daß ein unüberschaubarer Vorrat an Breitstreckwalzen für jeden denkbaren Einsatzzwecke vorgehalten werden muß.

Dabei kann durch Auswahl entsprechend breiter Streifen auch auf die Steigung der Schraubenlinie Einfluß genommen werden. Abhängig von dem Bahnmaterial, insbesondere der Härte des Bahnmaterials kann eine Anpassung des auf den Kern aufzubringenden Belages durch Auswahl kleiner oder großer Steigungen und/oder eines mehr oder minder harten Streifenmaterials vorgenommen werden. Die Ausrichtung der Breitstreckwalze auf die jeweilige Wickelaufgabe erfolgt schnell und ohne großen maschinellen Aufwand. Nachdem der Streifen fest mit der Walze verbunden worden ist, bedarf er keiner Nachbearbeitung. Die auf diese Weise hergerichtete Breitstreckwalze kann nach kurzer Bearbeitung an genau der Stelle eingesetzt werden, an der sie zuvor zum Zwecke der Aufbringung des Belages aus der Maschine entnommen worden ist. Bei großen Walzen, die schlecht aus einer Maschinenanlage demontiert werden können, kann die Aufbringung des Streifens auch innerhalb der Maschine vorgenommen werden. In jedem Falle kann die Walze aber an derselben Stelle nach ihrer Umrüstung in der Maschine eingesetzt werden, ohne daß deswegen Veränderungen am Maschinengestell vorgenommen werden müssen. In vielen Fällen wird die der Wickelaufgabe angepaßte Breitstreckwalze einsatzfähig sein, bevor noch eine neue Bahn in Bearbeitung genommen werden konnte.

Gemäß einer weiteren bevorzugten Ausführungsform der Erfindung weisen die Seitenkanten zweier einander benachbarter Streifen eine Neigung auf, so daß der Grundkörper auf seiner Belagoberfläche einen breiteren Querschnitt aufweist als an seiner dem Kern zugewandten Grundfläche. Diese Gestaltung des Grundkörpers ermöglicht einen genauen Anschluß zweier einander benachbarter Windungen, ohne daß die Grundkörper mit ihren Seitenwandungen, die insbesondere bei kleinen Kernquerschnitten auf Grund ihrer engen Umlenkung aufquellen können, sich gegenseitig behindern.

Dabei sitzt die Bahn fest auf dem Kern, so daß beim Umwickeln einer Bahn Relativbewegungen zwischen dem Kern einerseits und der ihn umgebenden Bahn nicht auftreten können. Die Oberfläche des Kerns kann darüber hinaus durch eine entsprechende Gestaltung für die Aufnahme des Streifens und dessen feste Haftung vorbereitet werden. Beispielsweise kann die Oberfläche aufgerauht oder mit einer Kleberschicht versehen werden, mit deren Hilfe der Streifen auf der Oberfläche verklebt wird.

Gemäß einer weiteren bevorzugten Ausführungsform der Erfindung weist der Streifen einander etwa parallel verlaufende Längskanten auf, von denen die eine einer von der Schraubenlinie beschriebenen ersten Windung an der anderen einer zweiten Windung anliegt, die der ersten Windung benachbart ist. Auf diese Weise ist die gesamte Oberfläche des Kerns vom Streifen bedeckt, so daß die einzelnen Windungen außer auf der Oberfläche des Kerns auch noch im Bereich ihrer Längskanten aneinander haften und damit den Belag als eine auf dem Kern nicht verrückbare Einheit ausbilden. Jedoch kann zwischen den einzelnen Windungen auch ein Abstand liegen. Außerdem kann der Kern auch in mehreren Abschnitten bewickelt werden, beispielsweise jeweils von der Mitte aus zu jeweils einem Ende, wobei jeder Abschnitt eine vom anderen verschiedene Wickelrichtung des Streifens aufweisen kann.

Weitere Einzelheiten der Erfindung ergeben sich aus der nachfolgenden ausführlichen Beschreibung und den beigefügten Zeichnungen, in denen eine bevorzugte Ausführungsform der Erfindung beispielsweise veranschaulicht ist.

In den Zeichnungen zeigen:

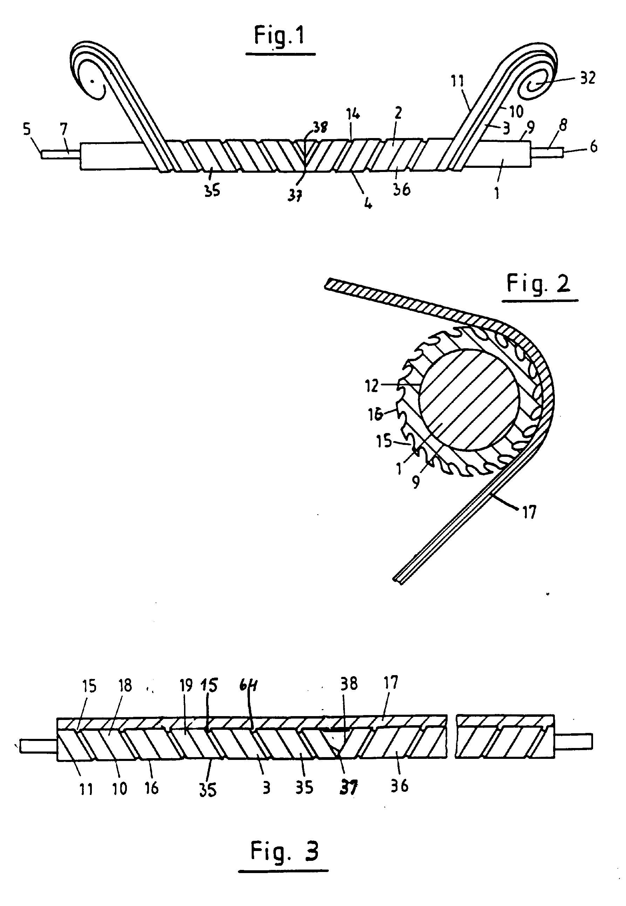

- Fig. 1:: Eine Seitenansicht einer teilweise bewickelten Walze,

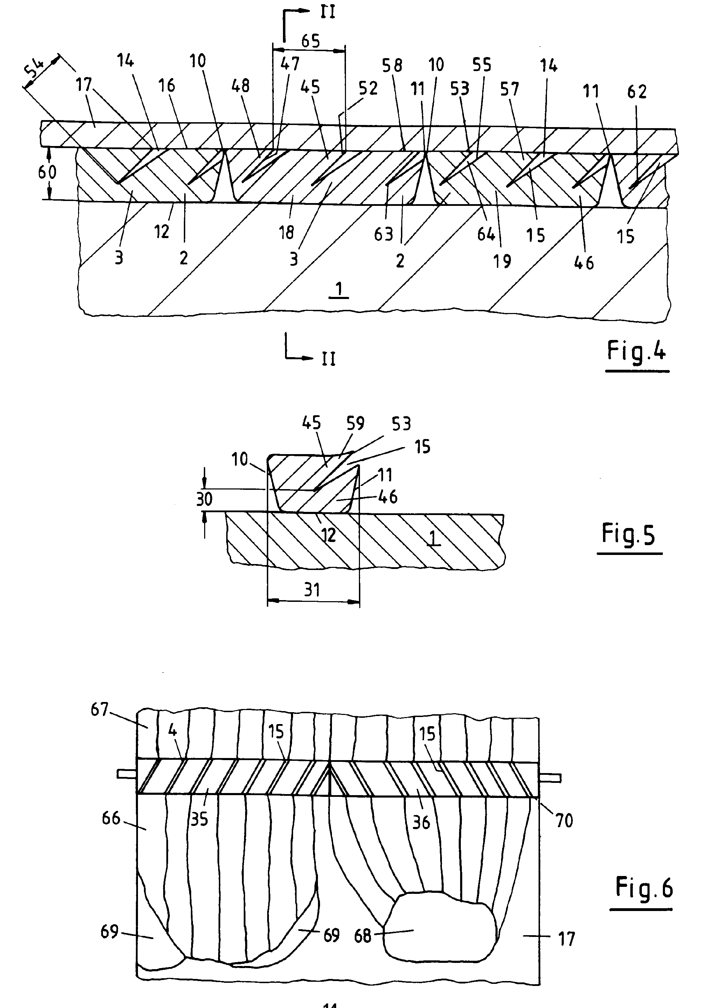

- Fig. 2:: einen Querschnitt durch eine bewickelte Walze entsprechend der Schnittlinie II-II in Figur 4,
- Fig. 3:: eine Draufsicht auf eine Breitstreckwalze mit aufliegender Bahn,
- Fig. 4:: einen vergrößerten Querschnitt durch einen auf einer Kernoberfläche aufgebrachte Streifen mit drei Nuten
- Fig. 5:: einen vergrößerten Querschnitt durch einen auf eine Kernoberfläche aufgebrachten Streifen mit einer Nut **und**
- Fig. 6:: eine Druntersicht unter eine auf eine Breitstreckwalze zulaufende und von dieser ablaufende Bahn.

Eine Breitstreckwalze besteht im wesentlichen aus einem Kern (1) und einem Belag (2). Der Belag (2) ist in Form eines Streifens (3) auf eine ihm zugewandte Kernoberfläche (9) des Kerns (1) in Form einer Schraubenlinie (4) aufgewickelt. Der Kern (1) besitzt an seinen beiden einander gegenüberliegenden Enden (5, 6) je eine Lagerstelle (7, 8), mit der er in einem entsprechend ausgebildeten aber nicht dargestellten Lagergestell drehbar gelagert ist.

Der Streifen (3) wird von zwei einander etwa parallel verlaufenden Seitenbegrenzungen (10, 11) begrenzt, zwischen denen sich einerseits eine der Kernoberfläche (9) zugewandte Unterseite (12) und andererseits eine dieser etwa planparallel verlaufende Belagoberfläche (16) erstreckt. Diese Seitenbegrenzungen (10, 11) sind an einem Grundkörper (46) ausgebildet, der mit seiner Unterseite (12) auf der Kernoberfläche (9) befestigt ist. In den Grundkörper (46) erstreckt sich von der Belagoberfläche (16) in Richtung auf den Kern (1) mindestens eine Nut (15), die mindestens einseitig von einer Lippe (45) begrenzt ist. Die Seitenbegrenzungen (10, 11) weisen eine Neigung von der Belagoberfläche (16) in Richtung auf die Unterseite (12) auf. Auf diese Weise ist der Grundkörper (46) im Bereich der Belagoberfläche (16) mit einem breiteren Querschnitt versehen als an seiner dem Kern (1) zugewandten Unterseite (12). Der Querschnitt des Grundkörpers (46) erhält auf diese Weise eine trapezförmige Ausbildung.

Die Lippe (45) bildet mit der Belagoberfläche (16) einen Neigungswinkel (52) der im nichtverformten Zustand der Lippe (45) zwischen 30° und 50° liegt. Im Einzelfall weist der Neigungswinkel (52) eine Größe auf, die von einem beim Befestigen des Streifens (3) auf diesen aufgebrachten Zug abhängt.

Jede Lippe (45) wird an ihrem der Oberfläche (16) abgewandten Ende von einer Oberkante (53) begrenzt. Zwischen der Belagoberfläche (16) und einem in den Grundkörper (46) hineinragenden Ende (63) der Nut (15) besitzt jede Lippe (45) eine Länge (54), die entsprechend der Tiefe der Nut (15) bemessen ist, die sie begrenzt. Auf diese Weise liegt jede Lippe (45) mit ihrer Oberkante (53) an einer auf der Belagoberfläche (16) aufliegenden Bahn (17) an. Dabei beaufschlagt die Oberkante (53) der Lippe (45) die Bahn (17) mit einem stark verformbaren Bereich (57). Nach Verformung der Lippe (45) bildet der stark verformbare Bereich (57) einen der Kernoberfläche (9) etwa planparallel verlaufenden zylindrischen Teil (58) der Belagoberfläche (16) aus.

Die Nute (15) besitzt eine Breite von etwa 0,8 bis 1,5 mm. Sie wird einerseits von der Lippe (45) und andererseits von einer Rückenfläche (55) begrenzt, in Richtung auf die die Lippe (45) verformbar ist. Die Rückenfläche (55) bildet eine ebene Fläche aus.

Die Belagoberfläche (16) weist im Bereich des stark verformbaren Bereichs (57) einen von der Nut (15) weggekrümmten Flächenanteil (59) auf. Diese Flächenanteil (59) steigt aus der Belagoberfläche (16) sanft an und ist im Bereich der Oberkante (53) etwa 0,2 bis 0,7 mm aus der Belagoberfläche (16) weggekrümmt. Der stark verformbare Bereich (57) weist eine Elastizität auf, die bei Belastung der Belagoberfläche (16) durch eine Bahn (17) Schwingbewegungen der Lippe (45) in Richtung auf die Rückenfläche (55) zuläßt.

Die Lippe (45) endet unter einem spitzen Neigungswinkel (62) an einem im Grundkörper (46) liegenden Ende (63) der Nut (15). Dieses Ende (63) hält einen dem Material des Streifens (3) entsprechenden Abstand von der Dicke (30) von der Unterseite (12), so daß auf Grund der Schwingbewegungen der Lippe (45) ein Bruch des Streifens im Bereich der Unterseite (12) nicht zu befürchten ist. Dabei weist der Grundkörper (46) eine sich auf dem Kern (1) erhebende geringe Höhe (60) auf. Diese liegt vorzugsweise in einer Größenordnung zwischen 6 und 12 mm.

Der Streifen (3) ist in Form von Windungen (18, 19) auf dem Kern (1) aufgewickelt. Diese Windungen besitzen je nach Breite (31) des Streifens (3) eine mehr oder minder große Steigung. Die Steigung ist am kleinsten, wenn sich in den Grundkörper (46) des Streifens (3) nur eine Nut (15) erstreckt. Soll eine größere Steigung der Windungen (18, 19) angestrebt werden, so verlaufen innerhalb des Grundkörpers (46) mindestens zwei einander etwa planparallel verlaufende Nuten (15, 64). Abhängig von einem gewählten Profil (14) sind einander benachbarte Nuten (15, 64) etwa gleich groß. Im Regelfall laufen eine die Lippe (45) in Richtung auf die Nut (15) begrenzende Oberfläche (47) und die Rückenfläche (55) in Form eines spitzen Winkels (62) aufeinander zu, der am Ende (63) der Nut ausgebildet ist. Dieser spitze Winkel (62) begünstigt die Elastizität der Lippe (45).

Unabhängig von einer auf einem Streifen (3) angeordneten Anzahl von Lippen (45, 48) mündet bei jedem Grundkörper (46) eine Nut (15) in eine der Seitenbegrenzungen (10, 11). Die der anderen Seitenbegrenzung (11, 10) benachbarte Nut (48) hält von dieser Seitenbegrenzung (11, 10) einen Abstand ein, der dem Abstand entspricht, den die einander benachbarten Nuten (15, 48) voneinander einhalten. Dieser Abstand der Nuten (15, 48) voneinander wird abhängig von der Steife und der Dicke der Bahn (17) gewählt. Der Abstand (65) ist bei dünnen und flexiblen Bahnen (17) kleiner als bei dicken und steifen Bahnen (17). Darüber hinaus ist auch die Steigung der Schraubenlinie (4) abhängig von der Flexibilität der Bahn (17) zu wählen.

Der Streifen (3) weist zwischen einer dem Kern (1) zugewandten Unterseite (12) und dem Ende (63) der Nut (15) eine Dicke (30) auf, die zwischen 2 und 6 mm liegt. Darüber hinaus weist der Streifen (3) zwischen seinen beiden Seitenkanten (10, 11) eine Breite (31) auf, die zwischen 5 und 30 mm liegt. Ein mit zwei Lippen (45) versehener Streifen (3) ist zwischen 12 bis 30 mm breit, ein Streifen (3) mit nur einer Lippe (45) ist zwischen 5 und 10 mm breit.

Der Streifen (3) ist in mindestens zwei Abschnitten (35, 36) auf den Kern (1) aufgewickelt, von denen der eine Abschnit (35) den Streifen (3) in einer Wickelrichtung und mindestens ein anderer Abschnitt (36) den Streifen (3) in einer entgegengesetzten Wickelrichtung aufnimmt. Dabei ist der Streifen (3) von einem Ende (5) des Kerns (1) bis etwa zur Mitte des Kerns (1) in einer Wickelrichtung aufgewickelt und von der Mitte des Kerns (1) bis zu dessen entgegengesetztem Ende (6) in entgegengesetzter Wickelrichtung. Die beiden Abschnitte (35, 36) stoßen im Bereich einander benachbarter Kanten (37, 38) ringförmig aneinander. Es ist auch möglich mehr als zwei Abschnitte (35, 36) auf einem Kern (1) anzuordnen.

Der Streifen (3) besteht aus einem elastischen Material, beispielsweise aus Gummi oder einem Kunststoff. Er ist zweckmäßigerweise auf den Kern aufgeklebt. Zu diesem Zwecke wird auf dem Kern (1) eine zum Verkleben des Streifens günstige Kernoberfläche (9) geschaffen. Diese kann aufgerauht oder gesandstrahlt sein. Es ist jedoch auch möglich, eine vollkommen glatte Kernoberfläche (9) zu schaffen.

Das Breitstreckverhalten einer Breitstreckwalze richtet sich auch nach der Härte, gemessen in shore des Belages (2). Diese Härte wird im Regelfall zwischen 35 und 45 shore liegen. Der Kern (1) kann aus Stahl oder einem anderen Werkstoff, beispielsweise Aluminium hergestellt werden. Es ist auch möglich, den Kern (1) aus einem anderen als einem metallischen Werkstoff, beispielsweise Hartgummi herzustellen.

Je nach der beabsichtigten Steigung der Windungen (18, 19) wird ein Streifen mit einer mehr oder minder großen Anzahl von Lippen ausgewählt. Sodann wird der Kern (1) der Breitstreckwalze in eine Drehvorrichtung, beispielsweise in eine Drehbank eingespannt und die Kernoberfläche (9) zur Aufbringung des Belages (2) hergerichtet. Zu diesem Zwecke kann sie zunächst mit Hilfe eines Sandstrahls aufgerauht und anschließend mit einem Klebstoff, auf dem der Streifen (3) haftet, eingestrichen werden. Bei der Auswahl des Klebstoffs ist auf das Material Rücksicht zu nehmen, aus dem der Streifen (3) besteht.

Der Streifen (3) kann von einem Ende (5) zum anderen Ende (6) des Kerns (1) in einer Wickelrichtung aufgewickelt werden. Wenn jedoch der Streifen (3) in zwei Abschnitten (35, 36) auf den Kern (1) aufgebracht werden soll, wird zunächst von der Mitte des Kerns aus in Richtung auf das eine Ende (5) der erste Abschnitt (35) in einer vorgegebenen Wickelrichtung aufgebracht. Dabei wird der auf den Streifen (3) aufgebrachte Zug so bemessen, daß die Lippen (45, 48) in einem für die jeweilige Bahn (17) zuträglichen Maß mit ihren Oberkanten (53) in Richtung auf die Rückenfläche (55) verformt sind. Durch diesen aufgebrachten Zug wird auch Einfluß auf die Elastizität der Lippe (45) genommen. Bei einem starken Zug sind die Lippen (45, 48) stärker vorgespannt als bei einem schwachen Zug.

Sodann wird vom ersten Abschnitt (35) in der Mitte des Kerns (1) die Kante (37) abgestochen, so daß eine ebene ringförmige Anlagefläche für den zweiten Abschnitt (36) entsteht. Nunmehr wird im Bereich dieser Kante (37) der Streifen (3) zur Ausbildung des zweiten Abschnittes (36) angesetzt und mit etwa dem gleichen Zug auf den Kern (1) aufgewickelt, der auch zur Ausbildung des ersten Abschnitts benutzt wurde. Nachdem auch im Bereich der Enden (5, 6) die Abschnitte (35, 36) durch Abtrennen des Streifens (3) begrenzt wurden, ist der Belag (2) für den Einsatz in der Breitstreckwalze fertig aufgebracht. Diese kann nunmehr an der selben Stellen in ein Walzengestell eingehängt und in diesem gelagert werden, an der schon vorher die Breitstreckwalze mit einem anderen Belag (2) im Einsatz war. Bei einer besonders breiten und schweren Breitstreckwalze ist es auch möglich, den Streifen (3) auf den Kern (1) aufzubringen, ohne die Breitstreckwalze aus dem Maschinengestell herauszunehmen. In diesem Falle erfolgt die Drehung des Kerns (1) während der Aufbringung des Streifens innerhalb des Maschinengestells, in dem die Breitstreckwalze gelagert ist.

Im Einsatz entfaltet die Breitstreckwalze ihre Wirkung sowohl auf einem Zulauf (66) der Bahn (17) in Richtung auf die Breitstreckwalze als auch auf einem in Förderrichtung der Bahn hinter der Breitstreckwalze liegenden Ablauf (67). Im Zulauf (66) werden Falten (68, 69) der Bahn (17) auf mehrere Nuten (15) gleichmäßige verteilt. Dadurch wird eine in der Bahn (17) etwa vorhandene Spannung gleichmäßig über die gesamte Walzenbreite homogenisiert. Beim ersten Auftreffen im Bereich einer bahnaufnehmenden Vorderkante (70) der Breitstreckwalze werden mögliche Verspannungen, die zu Falten (68, 69) führen würden, durch die umlaufenden Nuten (15) auf einer freien Länge der Bahn (17) im Zulauf (67) ausgeglichen. Bereits bestehende Falten (68, 69) werden "breitgestreckt".

Dabei treten Deformationen der Lippe (45, 48) auf, die Spannungsunterschiede innerhalb der Bahn (17) vor deren erstem Kontakt mit der Breitstreckwalze ausgleichen. Darüber hinaus wird durch die Deformation der Lippen (45, 48) die Spannung gleichmäßig über die gesamte Breitstreckwalze verteilt. Dabei können große Bewegungen der Lippe die Schwingform der Bahn innerhalb der freien Länge im Bereich des Zulaufs (66) positiv beeinflussen. Darüber hinaus wird die Bahn (17) durch die gegenläufige Schraubenwirkung im Bereich der beiden Abschnitte (35, 36) gestreckt.

## Patentansprüche

1. Breitstreckwalze mit einem tragenden Kern (1), auf den ein Streifen (3) in Form einer Schraubenlinie (4) als Belag (2) aufgewickelt ist, auf dessen Umfang mindestens teilweise eine zu fördernde und in ihrer Breite zu streckende Bahn (17) aufliegt, dadurch gekennzeichnet, daß der Streifen (3) eine dem Kern (1) abgewandte weitgehend zylindrische Belagoberfläche (16) ausbildet, in die ein Profil (14) in Form von Nuten (15) eingelassen ist.

2. Breitstreckwalze nach Anspruch 1, dadurch gekennzeichnet, daß der Streifen (3) zwei einander etwa parallel verlaufende Seitenbegrenzungen (10, 11) aufweist, von denen die eine einer von der Schraubenlinie (4) beschriebenen ersten Windung (18) an der anderen einer zweiten Windung (19) anliegt, die der ersten Windung (18) benachbart ist.

3. Breitstreckwalze nach Anspruch 1 und 2, dadurch gekennzeichnet, daß die Seitenbegrenzungen (10, 11) an einem Grundkörper (46) ausgebildet sind, in den sich von der Belagoberfläche (16) in Richtung auf den Kern (1) mindestens eine Nut (15) erstreckt, die mindestens einseitig von einer Lippe (48, 45) begrenzt ist.

4. Breitstreckwalze nach Anspruch 3, dadurch gekennzeichnet, daß die Seitenbegrenzungen (10, 11) in Richtung auf den Kern (1) eine Neigung aufweisen, so daß der Grundkörper (46) an der Belagoberfläche (16) einen breiteren Querschnitt aufweist als an seiner dem Kern (1) zugewandten Unterseite (12).

5. Breitstreckwalze nach Anspruch 4, dadurch gekennzeichnet, daß der Querschnitt des Grundkörpers (46) trapezförmig ist.

6. Breitstreckwalze nach Anspruch 3 bis 5, dadurch gekennzeichnet, daß die Lippe (45, 48) gegenüber der Belagoberfläche (16) einen Neigungswinkel (52) aufweist, der im nicht verformten Zustand der Lippe (45) zwischen 30° und 50° liegt.

7. Breitstreckwalze nach Anspruch 6, dadurch gekennzeichnet, daß der Neigungswinkel (52) eine Größe aufweist, die von einem beim Befestigen des Streifens (3) auf dem Kern (1) auf den Streifen (3) aufgebrachten Zug abhängt.

8. Breitstreckwalze nach Anspruch 3 bis 7, dadurch gekennzeichnet, daß jede Lippe (45, 48) eine sich von der Belagoberfläche (16) in den Grundkörper (46) erstreckende Länge (54) aufweist, die entsprechend der Tiefe der Nut (15) bemessen ist, die sie begrenzt.

9. Breitstreckwalze nach Anspruch 8, dadurch gekennzeichnet, daß die Lippe (45) in die Belagoberfläche (16) mit einer Oberkante (53) einmündet, die einen stark verformbaren Bereich (57) der Lippe (45) ausbildet und in Richtung auf eine die Nut (15) gegenüber der Lippe (45) begrenzende Rückenfläche (55) verformbar ist.

10. Breitstreckwalze nach Anspruch 3 bis 9, dadurch gekennzeichnet, daß die Nuten (15) eine Breite von 0,8 bis 1,5 mm besitzt.

11. Breitstreckwalze nach Anspruch 8 bis 10, dadurch gekennzeichnet, daß die Rückenfläche (55) eine ebene Fläche bildet.

12. Breitstreckwalze nach Anspruch 8 bis 10, dadurch gekennzeichnet, daß im stark verformbaren Bereich (57) die Belagoberfläche (16) einen von der Nut (15) weggekrümmten Flächenanteil (59) aufweist.

13. Breitstreckwalze nach Anspruch 12, dadurch gekennzeichnet, daß der Flächenanteil (59) aus der Belagoberfläche (16) sanft ansteigend im Bereich der Oberkante (53) etwa 0,2 bis 0,7 mm aus der Belagoberfläche (16) weggekrümmt ist.

14. Breitstreckwalze nach Anspruch 9 bis 13, dadurch gekennzeichnet, daß der stark verformbare Bereich (57) eine Schwingbewegungen der Lippe (45) in Richtung auf die Rückenfläche (55) und wieder zurück zulassende Elastizität aufweist.

15. Breitstreckwalze nach Anspruch 14, dadurch gekennzeichnet, daß die Lippe (45, 48) unter einem spitzen Neigungswinkel (62) an einem im Grundkörpers (46) liegenden Ende (63) der Nut (15) endet.

16. Breitstreckwalze nach Anspruch 3 bis 15, dadurch gekennzeichnet, daß der Grundkörper (46) eine sich auf dem Kern (1) erhebende geringe Höhe (60) aufweist.

17. Breitstreckwalze nach Anspruch 16, dadurch gekennzeichnet, daß der Grundkörper (46) eine Höhe (60) von 6 bis 12 mm aufweist.

18. Breitstreckwalze nach Anspruch 3 bis 17, dadurch gekennzeichnet, daß in den Grundkörper (46) eines Streifens (3) sich eine Nut (15) erstreckt.

19. Breitstreckwalze nach Anspruch 3 bis 17, dadurch gekennzeichnet, daß in den Grundkörper (46) eines Streifens (3) sich mindestens zwei einander etwa planparallel verlaufende Nuten (15, 64) erstrecken.

20. Breitstreckwalze nach Anspruch 19, dadurch gekennzeichnet, daß die Nuten (15) eines Profils (14) etwa gleich groß sind.

21. Breitstreckwalze nach Anspruch 19 und 20, dadurch gekennzeichnet, daß unabhängig von einer auf einem Streifen (3) angeordneten Anzahl von Lippen (45, 48) eine Nut (15) in eine die Seitenbegrenzungen (10, 11) des Grundkörpers (46) mündet und die der anderen Seitenbegrenzungen (11, 10) benachbarte Nut (48) von dieser einen Abstand einhält, der dem Abstand entspricht, den die einander benachbarten Nuten (15, 48) voneinander einhalten.

22. Breitstreckwalze nach Anspruch 21, dadurch gekennzeichnet, daß zwei einander benachbarte Nuten (15, 48) einen vom Material der Bahn (17) abhängig gewählten Abstand (65) voneinander einhalten.

23. Breitstreckwalze nach Anspruch 22, dadurch gekennzeichnet, daß der Abstand (65) bei dünnen und flexiblen Bahnen (17) kleiner als bei dicken und steifen Bahnen ist.

24. Breitstreckwalze nach Anspruch 1 bis 23, dadurch gekennzeichnet, daß die Schraubenlinie (4) eine von der Breite (31) des Streifens (3) und vom Durchmesser des Kerns abhängige Steigung aufweist.

25. Breitstreckwalze nach Anspruch 1 bis 24, dadurch gekennzeichnet, daß der Streifen (3) zwischen einer dem Kern (1) zugewandten Unterseite (12) und dem Ende (63) der Nut (15) eine Dicke (30) zwischen 2 und 6 mm aufweist.

26. Breitstreckwalze nach Anspruch 1 bis 25, dadurch gekennzeichnet, daß der Streifen (3) zwischen seinen beiden Seitenkanten (10, 11) eine Breite (31) zwischen 5 und 30 mm aufweist.

27. Breitstreckwalze nach Anspruch 26, dadurch gekennzeichnet, daß der mit zwei Lippen (45) versehene Streifen (3) 12 bis 30 mm breit ist.

28. Breitstreckwalze nach Anspruch 26, dadurch gekennzeichnet, daß der mit einer Lippe (45) versehene Streifen (3) 5 bis 10 mm breit ist.

29. Breitstreckwalze nach Anspruch 1 bis 28, dadurch gekennzeichnet, daß der Streifen (3) in mindestens zwei Abschnitten (35, 36) auf dem Kern (1) aufgewickelt ist, von denen der eine Abschnitt (35) den Streifen (3) in einer Wickelrichtung und mindestens ein anderer Abschnitt (36) den Streifen (3) in einer entgegengesetzten Wickelrichtung aufnimmt.

30. Breitstreckwalze nach Anspruch 1 bis 29, dadurch gekennzeichnet, daß der Streifen (3) aus einem elastischen Material besteht.

31. Breitstreckwalze nach Anspruch 30, dadurch gekennzeichnet, daß der Streifen (3) aus Gummi besteht.

32. Breitstreckwalze nach Anspruch 30, dadurch gekennzeichnet, daß der Streifen (3) aus einem Kunststoff besteht.

33. Breitstreckwalze nach Anspruch 1 bis 32, dadurch gekennzeichnet, daß der Streifen (3) auf den Kern (1) geklebt ist.

## Claims

1. A spreader roll having a supporting core (1) onto which a strip (3) is wound to provide a covering (2) in the form of a helix (4), on the periphery of which covering is disposed, at least partially, a web (17) which is to be conveyed and stretched in width, characterised in that the strip (3) provides a generally cylindrical covering surface (16) distanced from the core (1), in which surface a profile (14) in the form of grooves (15) is formed.

2. A spreader roll according to Claim 1, characterised in that the strip (3) has two side boundaries (10, 11) which extend so that they are approximately parallel to each other, of which the one side boundary of a first turn (18) described by the helix (4) rests on the other side boundary of a second turn (19) which is adjacent to the first turn (18).

3. A spreader roll according to Claim 1 or Claim 2, characterised in that the side boundaries (10, 11) are formed on a main body (46), into which at least one groove (15) extends towards the core (1) from the covering surface (16), the groove being delimited at least on one side by a lip (48, 45).

4. A spreader roll according to Claim 3, characterised in that the side boundaries (10, 11) are inclined towards the core (1), so that the main body (46) has a broader cross-section at the covering surface than the underside (12) thereof which faces the core (1).

5. A spreader roll according to Claim 4, characterised in that the cross-section of the main body (46) is trapezoidal.

6. A spreader roll according to Claims 3 to 5, characterised in that the lip (45, 48) has an angle of inclination (52) relative to the covering surface (16), the angle of inclination being between 30° and 50° in the non-deformed condition of the lip (45).

7. A spreader roll according to Claim 6, characterised in that the size of the angle of inclination (52) is dependent on a pull which is exerted upon the strip (3) when the strip (3) is being secured to the core (1).

8. A spreader roll according to Claims 3 to 7, characterised in that each lip (45, 48) is of a length (54) which extends from the covering surface (16) into the main body (46) and which is sized in accordance with the depth of the groove (15) which it delimits.

9. A spreader roll according to Claim 8, characterised in that an upper edge (53) of the lip (45) opens into the covering surf ace (16), the upper edge forming a region (57) of the lip (45) which can be deformed to a large extent and which is deformable towards a rear surface (55) which delimits the groove (45) relative to the lip (15).

10. A spreader roll according to Claim 3 to Claim 9, characterised in that the grooves (15) are between 0.8 to 1.5 mm in width.

11. A spreader roll according to Claim 8 to 10, characterised in that the rear surface (55) forms a flat face.

12. A spreader roll according to Claim 8 to 10, characterised in that in the region (57) which is deformable to a great extent the covering surface (16) has a part of the surface (59) which is curved away from the groove (15).

13. A spreader roll according to Claim 12, characterised in that the part of the surface (59) curves away from the covering surface (16), gently rising in the region of the upper edge (53) to about 0.2 to 0.7 mm outside the covering surface (16).

14. A spreader roll according to Claim 9 to 13, characterised in that the region (57) which is deformable to a great extent is of an elasticity which permits oscillating movements of the lip (45) in the direction of the rear surface (55) and back again.

15. A spreader roll according to Claim 14, characterised in that the lip (45, 48) ends at an acute angle of inclination (62) at an end (63) of the groove (15) disposed in the main body (46).

16. A spreader roll according to Claims 3 to 15, characterised in that the main body (46) is of low height (60) which increases on the core (1).

17. A spreader roll according to Claim 16, characterised in that the main body (48) is from 6 to 12 mm in height (60).

18. A spreader roll according to Claims 3 to 17, characterised in that a groove (15) extends into the main body (46) of a strip (3).

19. A spreader roll according to Claim 3 to 17, characterised in that extending into the main body (46) of a strip (3) are at least two grooves (15, 64) which extend to each other in substantially plane parallel manner.

20. A spreader roll according to Claim 19, characterised in that the grooves (15) of a profile (14) are of approximately equal size.

21. A spreader roll according to Claims 19 and 20, characterised in that independently of a number of lips (45, 48) arranged on a strip (3), one groove (15) opens towards one of the side boundaries (11, 10), and the groove (48) adjacent to the other side boundaries (11, 10) is distanced from this in correspondency with the distance between the mutually adjacent grooves (15. 48).

22. A spreader roll according to Claim 21, characterised in that the spacing (65) between two mutually adjacent grooves (15, 48) is selected in dependency on the material of the web (17).

23. A spreader roll according to Claim 22, characterised in that the spacing (65) with thin and flexible webs (17) is less than with thick and stiff webs.

24. A spreader roll according to Claims 1 to 23, characterised in that the helix (4) increases in dependency on the width (31) of the strip (3) and on the diameter of the core.

25. A spreader roll according to Claims 1 to 24, characterised in that the strip (3) is between 2 and 6 mm in thickness (30) between an underside (12) facing the core (1) and the end (63) of the groove (15).

26. A spreader roll according to Claims 1 to 25, characterised in that the strip (3) is between 5 and 30 mm in width (31) between its two side edges (10, 11).

27. A spreader roll according to Claim 26, characterised in that the strip (3) provided with two lips (45) is 12 to 30 mm in width.

28. A spreader roll according to Claim 26, characterised in that the strip (3) provided with a lip (45) is between 5 and 10 mm in width.

29. A spreader roll according to Claims 1 to 28, characterised in that the strip (3) is wound up onto the core (1) in at least two sections (35, 36), of which one section (35) receives the strip (3) in one direction of coiling and at least one other section (36) receives the strip (3) in an oppositely disposed direction of coiling.

30. A spreader roll according to Claims 1 to 29, characterised in that the strip (3) is made of an elastic material.

31. A spreader roll according to Claim 30, characterised in that the strip (3) is made of rubber.

32. A spreader roll according to Claim 30, characterised in that the strip (3) is made of a plastics material.

33. A spreader roll according to Claim 1 to 32. characterised in that the strip (3) is stuck onto the core (1).

## Revendications

1. Rouleau d'étalement en largeur comprenant un noyau porteur (1) sur lequel une bandelette (3) est enroulée en une ligne hélicoïdale (4), pour constituer une garniture (2) sur la périphérie de laquelle est appuyée au moins partiellement une bande (17) qu'il s'agit de faire avancer et d'étaler en largeur, caractérisé en ce que la bandelette (3) forme une surface (16) de garniture sensiblement cylindrique, dirigée vers le noyau (1), et dans laquelle est ménagé un profil (14) présentant la forme de rainures (15).

2. Rouleau d'étalement en largeur selon la revendication 1, caractérisé en ce que la bandelette (3) présente deux limites latérales (10, 11) s'étendant à peu près parallèlement entre elles, une limite d'une première spire (18) décrite par la ligne hélicoïdale (4) étant appuyée contre l'autre limite d'une deuxième spire (19) qui est adjacente à la première spire (18).

3. Rouleau d'étalement en largeur selon la revendication 1 ou 2, caractérisé en ce que les limites latérales (10, 11) sont formées sur un corps de base (46) dans lequel s'étend au moins une rainure (15) partant de la surface (16) de la garniture en direction du noyau (1) et qui est limitée au moins d'un côté par une lèvre (48, 45).

4. Rouleau d'étalement en largeur selon la revendication 3, caractérisé en ce que les limites latérales (10, 11) présentent une inclinaison en direction du noyau (1), de sorte que le corps de base (46) présente une section transversale plus large au niveau de la surface (16) de la garniture qu'au niveau de sa face inférieure (12) dirigée vers le noyau (1).

5. Rouleau d'étalement en largeur selon la revendication 4, caractérisé en ce que la section du corps de base (46) est de forme trapézoïdale.

6. Rouleau d'étalement en largeur selon les revendications 3 à 5, caractérisé en ce que la lèvre (45, 48) présente, par rapport à la surface (16) de la garniture, un angle d'inclinaison (52) qui est compris entre 30° et 50° à l'état non déformé de la lèvre (45).

7. Rouleau d'étalement en largeur selon la revendication 6, caractérisé en ce que l'angle d'inclinaison (52) possède une valeur qui dépend de la traction appliquée sur la bande (3) au moment de la fixation de la bande (3) sur le noyau (1).

8. Rouleau d'étalement en largeur selon les revendications 3 à 7, caractérisé en ce que chaque lèvre (45, 48) présente une longueur (54) qui s'étend de la surface (16) de la garniture dans le corps de base (46), qui est dimensionnée en fonction de la profondeur de la rainure (15) qu'elle limite.

9. Rouleau d'étalement en largeur selon la revendication 8, caractérisé en ce que la lèvre (45) débouche dans la surface (16) de la garniture avec une arête supérieure (53) qui forme une région (57) fortement déformable de la lèvre (45) et qui peut se déformer en direction d'une surface arrière (55) qui limite la rainure (15) par rapport à la lèvre (45).

10. Rouleau d'étalement en largeur selon les revendications 3 à 9, caractérisé en ce que la rainure (15) possède une largeur de 0,8 à 1,5 mm.

11. Rouleau d'étalement en largeur selon les revendications 8 à 10, caractérisé en ce que la surface arrière (55) forme une surface plane.

12. Rouleau d'étalement en largeur selon les revendications 8 à 10, caractérisé en ce que, dans la région (57) fortement déformable, la surface (16) de la garniture présente une partie de surface (59) qui s'incurve dans le sens qui s'éloigne de la rainure (15).

13. Rouleau d'étalement en largeur selon la revendication 12, caractérisé en ce que la partie de surface (59) s'incurve en montant en pente douce à partir de la surface (16) de la garniture dans la région du bord supérieur (53) en s'élevant d'environ 0,2 à 0,7 mm par rapport à la surface (16) de la garniture.

14. Rouleau d'étalement en largeur selon les revendications 9 à 13, caractérisé en ce que la région fortement déformable (57) présente une élasticité qui permet un mouvement d'oscillation de la lèvre (45) en direction de la surface de dos (55) et de retour en sens inverse.

15. Rouleau d'étalement en largeur selon la revendication 14, caractérisé en ce que la lèvre (45, 48) se termine en formant un angle d'inclinaison aigu (62) à une extrémité (63) de la rainure (15) qui se trouve dans le corps de base (46).

16. Rouleau d'étalement en largeur selon les revendications 3 à 15, caractérisé en ce que le corps de base (46) présente une faible hauteur (60) de saillie sur le noyau.

17. Rouleau d'étalement en largeur selon la revendication 16, caractérisé en ce que le corps de base (46) possède une hauteur (60) de 6 à 12 mm.

18. Rouleau d'étalement en largeur selon les revendications 3 à 17, caractérisé en ce qu'une rainure (15) s'étend dans le corps de base (46) d'une bandelette (3).

19. Rouleau d'étalement en largeur selon les revendications 3 à 17, caractérisé en ce qu'au moins deux rainures (15, 64) orientées à peu près parallèlement et dans un même plan s'étendent dans le corps de base (46) d'une bandelette (3).

20. Rouleau d'étalement en largeur selon la revendication 19, caractérisé en ce que les rainures (15) d'un profil (14) sont à peu près de même taille.

21. Rouleau d'étalement en largeur selon les revendications 19 et 20, caractérisé en ce qu'indépendamment d'un certain nombre de lèvres (45, 48) disposées sur une bandelette (3), une rainure (15) débouche dans une des limites latérales (10, 11) du corps de base (46) et la rainure (48) adjacente à l'autre limite latérale (11, 10), se trouve à une distance de cette limite qui correspond à la distance que les rainures (15, 48) mutuellement adjacentes ménagent entre elles.

22. Rouleau d'étalement en largeur selon la revendication 21, caractérisé en ce que deux rainures (15, 48) adjacentes entre elles ménagent entre elles une distance (65) qui est choisi en fonction du matériau de la bande (17).

23. Rouleau d'étalement en largeur selon la revendication 22, caractérisé en ce que la distance (65) est plus petite dans le cas de bandes (17) minces et souples que dans le cas de bandes épaisses et raides.

24. Rouleau d'étalement en largeur selon les revendications 1 à 23, caractérisé en ce que la ligne hélicoïdale (4) présente un pas qui dépend de la largeur (31) de la bandelette (3) et du diamètre du noyau.

25. Rouleau d'étalement en largeur selon les revendications 1 à 24, caractérisé en ce que la bandelette (3) présente une épaisseur d'entre 2 et 6 mm entre une face inférieure (12) dirigée vers le noyau et l'extrémité (63) de la rainure (15).

26. Rouleau d'étalement en largeur selon une des revendications 1 à 25, caractérisé en ce que la bandelette (3) possède une largeur (31) d'entre 5 et 30 mm entre ses deux bords latéraux (10, 11).

27. Rouleau d'étalement en largeur selon la revendication 26, caractérisé en ce que la bandelette (3) munie de deux lèvres (45) est large de 12 à 30 mm.

28. Rouleau d'étalement en largeur selon la revendication 26, caractérisé en ce que la bandelette (3) munie d'une lèvre (45) est large de 5 à 10 mm.

29. Rouleau d'étalement en largeur selon les revendications 1 à 28, caractérisé en ce que la bandelette (3) est enroulée sur le noyau (1) en au moins deux segments (35, 36) dont un segment (35) comprend la bandelette (3) orientée dans un sens d'enroulement et au moins un autre segment (36) comprend la bandelette (3) dans un sens d'enroulement opposé.

30. Rouleau d'étalement en largeur selon les revendications 1 à 29, caractérisé en ce que la bandelette (3) est faite d'une matière élastique.

31. Rouleau d'étalement en largeur selon la revendication 30, caractérisé en ce que la bandelette (3) est en caoutchouc.

32. Rouleau d'étalement en largeur selon la revendication 30, caractérisé en ce que la bandelette (3) est faite d'une matière plastique.

33. Rouleau d'étalement en largeur selon les revendications 1 à 32, caractérisé en ce que la bandelette (3) est collée sur le noyau (1).
